# EUROPÄISCHE PATENTSCHRIFT

(11) **EP 4 470 843 B1**
(45) Veröffentlichungstag und Bekanntmachung des Hinweises auf die Patenterteilung: **29.07.2026**
(21) Anmeldenummer: 24206419.4
(22) Anmeldetag: 17.03.2021
(51) Int. Cl.: B62D 21/15, B62D 21/02, B60R 19/12, B60R 19/18

(54) **VORRICHTUNG ZUM ENERGIEABBAU BEI EINER CRASHBEDINGTEN ENERGIEEINWIRKUNG AUF EIN NUTZFAHRZEUG**
DEVICE FOR REDUCING ENERGY IN THE EVENT OF A CRASH-INDUCED IMPACT ON A COMMERCIAL VEHICLE
DISPOSITIF DE RÉDUCTION D'ÉNERGIE LORS D'UNE INFLUENCE D'ÉNERGIE EN CAS DE COLLISION SUR UN VÉHICULE UTILITAIRE

(30) Priorität: 14.04.2020 DE 102020110189
(43) Veröffentlichungstag der Anmeldung: 04.12.2024
(62) Teilanmeldung aus: 21713609.2
(73) Patentinhaber: MAN Truck & Bus SE, 80995 München (DE)
(72) Erfinder: Wick, Michael, 80995 München (DE); Gernhardt, Alexander, 80995 München (DE); Kondic, Darko, 80995 München (DE); Schmitz, Andreas, 80995 München (DE)
(74) Vertreter: v. Bezold & Partner Patentanwälte - PartG mbB

(56) Entgegenhaltungen:
- EP-A1- 2 138 381
- DE-A1- 102016 216 317
- DE-A1- 102019 113 842
- FR-A1- 3 066 737
- JP-A- 2018 187 976
- JP-A- S4 870 219

## Beschreibung

Die Erfindung betrifft eine Vorrichtung zum Energieabbau bei einer crashbedingten Energieeinwirkung auf ein Nutzfahrzeug. Die Erfindung betrifft ferner ein Nutzfahrzeug mit einer solchen Vorrichtung.

Um zu vermeiden, dass bei einem Aufprall eines Personenkraftwagens (PKW) auf ein Nutzfahrzeug der Pkw unter das Nutzfahrzeug im vorderen Fahrzeugbereich geschoben wird, sind Unterfahrschutzeinrichtungen bekannt, die im Bereich des Stoßfängers derart angeordnet sind, dass die bei einem Zusammenprall auftretenden Kräfte in den Fahrzeugrahmen weitergeleitet werden, ohne dass der Pkw unter das Nutzfahrzeug rutscht. Mit der vorgenannten, vorderen Unterfahrschutzeinrichtung soll zum einen das Verletzungsrisiko eines Pkw-Führers verringert und zum anderen auch nach einem Frontaufprall eine sichere Führung der Vorderachse des Lastkraftwagens sichergestellt werden. Unter anderem ist eine maximale Anordnungshöhe, 400 mm über der Fahrbahn, des Unterfahrschutzes vorgeschrieben. Beispielshaft wird auf die Offenlegungsschrift DE 10 2004 026 280 A1 verwiesen.

Das Dokument DE 10 2019 113 842 A1 stellt eine Kühlergrillverstärkung bereit. Eine Frontendstruktur beinhaltet einen Frontendträger und einen relativ zum Frontendträger fixierten Kühlergrill. Zwei Halterungen sind zwischen dem Frontendträger und dem Kühlergrill angeordnet. Die beiden Halterungen sind entlang einer Fahrzeugquerachse voneinander beabstandet. Die beiden Halterungen weisen jeweils zwei Schenkel auf. Die Schenkel erstrecken sich jeweils vom Frontendträger in Richtung des Kühlergrills. Zwei Stangen sind voneinander und vom Frontendträger beabstandet. Die Stangen verlaufen entlang der Fahrzeugquerachse von einer der Halterungen zur anderen der Halterungen.

Das Dokument JP S4870219 A betrifft eine Rahmenstruktur für ein Fahrzeug, wie z. B. ein Automobil. Das Automobil weist eine Struktur mit einem V-förmigen Querschnitt oder einem anderen beliebigen Querschnitt auf, der eine leicht verformbare einschichtige Struktur hat. Ein Hauptrahmenteil ist an einer vorbestimmten Stelle, z. B. im Querschnitt, verschweißt und bildet so ein doppeltes Strukturteil.

Ferner ist aus der Praxis bekannt, das Fahrerhaus eines Nutzfahrzeugs für den Crashfall so auszubilden, dass bei einem crashbedingten Auffahren des Nutzfahrzeugs auf ein vorausfahrendes Fremdfahrzeug der Fahrer den Crash im Fahrerhaus auch bei einer Beschädigung des Fahrerhauses möglichst unbeschadet überstehen kann.

In der Praxis kommen ferner vermehrt Nutzfahrzeuge zum Einsatz, die zumindest teilweise batterieelektrisch angetrieben sind. Bei Nutzfahrzeugen mit einem Fahrgestellrahmen, der zwei Fahrgestell-Längsträger aufweist, die durch Querträger mit einander verbunden sind, ist eine mögliche Stelle zur Anordnung der Hochvolt(HV)-komponenten der Bereich zwischen den Rahmen-Längsträgern, wo z. B. das Batteriepack oder andere HV-Komponenten befestigt werden können. Derartige HV-Komponenten müssen für den Crash-Fall vor Beschädigung geschützt werden. Zudem kann eine hohe Energieeinleitung in ein Batteriepack bei einer Aufprallkollision zur Endzündung des Batteriepacks und zu einer sehr schnellen und starken Hitzeentwicklung führen, die für einen im Fahrerhaus eingeklemmten Fahrer lebensgefährlich sein kann.

Derartige im Bereich des Tragrahmens angeordnete HV-Komponenten können jedoch bei einem crashbedingten Auffahren des Nutzfahrzeugs auf ein vorausfahrendes Fahrzeug nicht ausreichend sicher durch bekannte Unterfahrschutzeinrichtungen oder die bekannten Ansätze zum Energieabbau bei einer crashbedingten Energieeinwirkung auf ein Nutzfahrzeug geschützt werden.

Folglich besteht ein Bedarf für einen Fahrzeugentwurf, welcher festgelegte Sicherheitsziele erreicht und mit dem Nachteile herkömmlicher Techniken zum Auffahrschutz vermieden werden können. Es ist insbesondere eine Aufgabe der Erfindung, eine verbesserte Technik zum Energieabbau bei einem crashbedingten Auffahren des Nutzfahrzeugs auf ein vorausfahrendes Fahrzeug bereitzustellen, mit der im Bereich des Fahrzeugrahmens angeordnete HV-Komponenten besser geschützt werden können.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein Grundgedanke der Erfindung besteht darin, einen Bereich oberhalb der Rahmen-Längsträger des Nutzfahrzeugs für den Crashfall gesondert abzusichern. Während bekannte Unterfahrschutzeinrichtungen den Bereich unterhalb der Rahmen-Längsträger absichern und spezielle Fahrerhauskonstruktionen den dort befindlichen Fahrer schützen können, ist der Bereich zwischen und direkt oberhalb der Rahmen-Längsträger im Crashfall nicht ausreichend geschützt, insbesondere bei einem crashbedingten Auffahren des Nutzfahrzeugs auf einen vorausfahrenden Trailer, dessen Traggestell und Ladefläche üblicherweise eine Bauhöhe hat, so dass der Trailer im Crashfall genau in den Bereich knapp oberhalb der Rahmen-Längsträger eindringt.

Erfindungsgemäß wird hierzu eine Deformationseinrichtung bereitgestellt, die im Crashfall unter Abbau von Aufprallkräften deformierbar ist, und die so am Fahrzeugrahmen, vorzugsweise an den Rahmen-Längsträgern befestigbar ist, dass sich die Deformationseinrichtung im montierten Zustand oberhalb und quer zu den Rahmen-Längsträgern erstreckt. Dadurch kann eine Antriebskomponente oder HV-Komponente, die dahinter im Bereich der und/oder zwischen den Rahmen-Längsträgern angeordnet ist, im Crashfall geschützt werden. Dies ist besonders für eine dort angeordnete Hochvolt-Batterie vorteilhaft, da diese im Crashfall nicht nur beschädigt werden kann, sondern ferner im Unterschied zu einem Verbrennungsmotor ein viel größeres Risiko hat, explosionsartig in Brand zu geraten.

Entsprechend wird gemäß einem allgemeinen Gesichtspunkt der Erfindung eine Vorrichtung zum Energieabbau bei einer crashbedingten Energieeinwirkung auf ein Nutzfahrzeug bereitgestellt. Das Nutzfahrzeug umfasst in an sich bekannter Weise einen Fahrzeugrahmen, auch als Leiterrahmen bezeichnet, aufweisend zwei Rahmen-Längsträger, die durch Querträger mit einander verbunden sind.

Die Vorrichtung zum Energieabbau umfasst eine Deformationseinrichtung, die im Crashfall unter Abbau von Aufprallkräften bzw. Aufprallenergie deformierbar ist. Anders ausgedrückt ist die Deformationseinrichtung ausgeführt, einen Teil der Aufprallenergie zu absorbieren und/oder durch Verformung gezielt abzubauen. Hierzu kann die Deformationseinrichtung eine oder mehrere Crashstreben aufweisen, was nachfolgend noch beschrieben wird.

Die Vorrichtung umfasst ferner zwei Aufnahmeelemente, nachfolgend als erstes und zweites Aufnahmeelement bezeichnet, zur Befestigung der Deformationseinrichtung an den beiden Rahmen-Längsträgern und zum Einleiten eines Teils der Aufprallenergie in die Rahmen-Längsträger. Hierzu ist die Deformationseinrichtung an einem ersten Endbereich mit dem ersten Aufnahmeelement und an einem gegenüberliegenden zweiten Endbereich mit dem zweiten Aufnahmeelement verbunden.

Ferner sind das erste Aufnahmeelement und das zweite Aufnahmeelement so ausgeführt, dass das erste Aufnahmeelement und das zweite Aufnahmeelement jeweils an einem der Rahmen-Längsträger befestigbar und/oder befestigt sind zum Einleiten eines Teils der Aufprallenergie in den Leiterrahmen. Hierzu können die Aufnahmeelemente zweckmäßig ausgebildet sein, um im Hinblick auf die üblichen Abmessungen, Oberflächenform und vorgesehenen Durchgangslöcher des Rahmen-Längsträgers kraft-, form- und/oder stoffschlüssig an einem Rahmen-Längsträger befestigt werden zu können, um einen Teil der Aufprallenergie in die Rahmen-Längsträger einleiten zu können. Nachfolgend werden besonders vorteilhafte konstruktive Ausführungsformen hiervon beschrieben, auf die die Erfindung jedoch nicht beschränkt sein soll.

Ferner sind die Deformationseinrichtung und das erste und zweite Aufnahmeelement so ausgelegt, dass wenn die Aufnahmeelemente jeweils an den Rahmen-Längsträgern befestigt sind, sich die Deformationseinrichtung oberhalb und quer zu den Rahmen-Längsträgern erstreckt, vorzugsweise zum Schutz einer zwischen den Rahmen-Längsträgern angeordneten Hochvolt-Einrichtung bei einem crashbedingten Auffahren des Nutzfahrzeugs auf einen vorausfahrenden Trailer. Anders ausgedrückt sind die Deformationseinrichtung und die beiden Aufnahmeelemente so ausgebildet, dass die Deformationseinrichtung mittels der Aufnahmeelemente so an den Rahmen-Längsträgern montierbar ist, dass sich die Deformationseinrichtung im an den Rahmen-Längsträgern montierten Zustand oberhalb und quer zu den Rahmen-Längsträgern erstreckt. Die Deformationseinrichtung ist hierbei im montierten Zustand, in Vorwärtsfahrtrichtung gesehen, vor den Aufnahmeelementen angeordnet. Besonders vorteilhaft ist ein Bereich von 0 bis 50 cm oberhalb der Rahmen-Längsträger, da dieser Bereich bei einem crashbedingten Auffahren des Nutzfahrzeugs auf einen vorausfahrenden Trailer der Eindringhöhe des Trailers entspricht.

Die Deformationseinrichtung umfasst mindestens eine Strebe, nachfolgend auch als Crash-strebe bezeichnet, die im Crashfall unter Abbau von Aufprallkräften deformierbar ist. Eine Crashstrebe ist vorteilhaft im Hinblick auf die guten Deformationseigenschaften im Crashfall und kann einfach mit den gewünschten Energieabsorptionseigenschaften hergestellt werden. Die mindestens eine Crashstrebe ist im montieren Zustand der Deformationseinrichtung oberhalb und quer zu den Rahmen-Längsträgern angeordnet.

Gemäß einer vorteilhaften Variante dieser Ausführungsform ist die mindestens eine Strebe gekrümmt ausgeführt, vorzugsweise derart, dass bezogen auf die Aufnahmeelemente die mindestens eine Strebe von diesen weggekrümmt ausgeführt ist. Anders ausgedrückt ist die Strebe im montieren Zustand der Deformationseinrichtung in Vorwärtsfahrtrichtung gekrümmt und in Vorwärtsfahrtrichtung gesehen, vor den Aufnahmeelementen angeordnet. Diese gekrümmte Ausführung ist besonders vorteilhaft im Hinblick auf eine verbesserte Schutzwirkung und Deformationseigenschaften der mindestens einen Crashstrebe. Die Strebe kann bananenförmig und/oder bogenförmig ausgeführt sein.

In einer weiteren bevorzugten Variante ist die Strebe als Hohlprofil ausgeführt. Beispielsweise kann die Strebe rohrförmig, z. B. als Mehrkantrohr, ausgeführt sein. Hohlprofile bieten den besonderen Vorzug einer hohen Festigkeit bei gleichzeitig geringem Gewicht und gutem Deformationsverhalten im Crashfall.

Hierbei ist es möglich, die Strebe so auszuführen, dass die Strebe ein oder mehrere Innenrohre und ein Außenrohr umfasst. Dies bietet den besonderen Vorzug, dass hiermit die Auslegung der Crashstrebe in besonders vorteilhafter Weise gesteuert bzw. optimiert werden kann. Beispielsweise kann das Innenrohr aus einem hochwertigerem Material als das Außenrohr gefertigt sein. Beispielsweise kann das Innenrohr aus einem Material gefertigt sein, das eine höhere Festigkeit als das Material des Außenrohres aufweist. Im Rahmen der Erfindung wurde festgestellt, dass hiermit besonders gute Deformationseigenschaften der Strebe erzielt werden können.

Alternativ oder zusätzlich ist es möglich, dass das mindestens eine Innenrohr aus einem Kohlefaserverbundwerkstoff gefertigt ist, während das Außenrohr als Stahlrohr und/oder Gussbauteil gefertigt ist.

In einer weiteren bevorzugten Ausführungsform kann die Deformationseinrichtung zwei parallel übereinander angeordnete Streben aufweisen. Hiermit können die Energieabsorptionseigenschaften der Deformationseinrichtung im Crashfall weiter verbessert werden. Im an den Rahmen-Längsträgern montierten Zustand der Deformationseinrichtung sind die beiden Streben in Vertikalrichtung übereinander angeordnet. Es können auch drei oder mehr Streben vorgesehen sein. Zusätzlich zu der mindestens einen Strebe, die oberhalb und quer zu den Rahmen-Längsträgern angeordnet ist, ist es auch möglich, mindestens eine weitere Strebe vorzusehen, die auf Höhe der Rahmen-Längsträger, somit nicht oberhalb hiervon, angeordnet ist.

Gemäß einem weiteren Aspekt kann durch mindestens eine der als Hohlprofil oder rohrförmig ausgeführten Strebe ein Seil, z. B. ein Stahlseil, durchgezogen sein. Das Stahlseil kann an den Befestigungselementen (wie nachfolgend beschrieben), an den Aufnahmeelementen und/oder an den Rahmenlängsträgern befestigt sein, um noch mehr Kräfte auf diese Elemente umleiten zu können.

Bei einer möglichen Variante dieser Ausführungsform kann die Deformationseinrichtung ein Koppelteil umfassen, das die zwei parallel übereinander angeordneten Streben umgreift, auf Abstand hält und vorzugsweise mit diesen an dessen Kanten und über Schweißlöcher verschweißt ist. Dies verbessert die Stabilität der parallel übereinander angeordneten Streben. Hierbei kann das Koppelteil zwei plattenförmige und klammerförmige Teilelemente umfassen, die jeweils auf gegenüberliegenden Seiten, in Vorwärtsfahrtrichtung gesehen, an den Streben befestigt sind.

Die Deformationseinrichtung weist zwei Befestigungselemente auf, zwischen denen die mindestens eine Strebe angeordnet und jeweils endseitig befestigt ist. Hierbei sind die Befestigungselemente mit dem Aufnahmeelement kraftschlüssig und/oder formschlüssig verbindbar und/oder verbunden, dadurch, dass die Befestigungselemente jeweils in eine Aufnahmeöffnung eines der Aufnahmeelemente gesteckt ist und dort mit dem Aufnahmeelement kraftschlüssig verbindbar und/oder verbunden ist.

Die Strebe kann mit den Befestigungselementen verschweißt sein. Das Bereitstellen der mindestens einen Strebe und der Befestigungselemente als separate Bauteile und das nachträgliche Verschweißen hat herstellungstechnische Vorteile. Die Deformationseinrichtung kann als einteiliges Bauteil oder einteilige Baugruppe ausgeführt sein. Die Deformationseinrichtung, umfassend die mindestens eine Strebe und die zwei Befestigungselemente, können beispielsweise als Gussteil hergestellt sein.

Eine bevorzugte Ausführungsform der Befestigungselemente sieht vor, dass die Befestigungselemente einen geknickten Verlauf aufweisen. Der geknickte Verlauf ist derart, dass wenn die Aufnahmeelemente jeweils an den Rahmen-Längsträgern befestigt sind, ein unmittelbar am Aufnahmeelement befestigter erster Abschnitt des Befestigungselements fluchtend zum Aufnahmeelement und parallel zur Längsrichtung der Rahmen-Längsträger verläuft und sich daran ein zweiter Abschnitt des Befestigungselements anschließt, an dem die mindestens eine Strebe befestigt ist, und der in Bezug auf die Längsrichtung der Rahmen-Längsträger nach außen abgeknickt ist. Dies bietet den folgenden Vorteil: Im Crashfall wirkt eine Aufprallkraft auf die Crashstrebe, die die Crashstrebe nach hinten zieht, d. h. in eine Richtung entgegen der Vorwärtsfahrtrichtung. Bei einem geknickten Verlauf, wie vorstehend beschrieben, werden nunmehr die zweiten leicht abgeknickten Abschnitte durch diese von der Crashstrebe übertragene Aufprallkraft etwas hin zu Mitte, d.h. zur Crashstrebe gezogen. Somit richten sich diese zweiten Abschnitte im Crashfall fluchtend zu den Rahmenlängsträgern aus und der Knick verschwindet oder wird zumindest kleiner. Dies ermöglicht eine höhere Crashstabilität und Krafteinleitung in Längsrichtung der Rahmen-Längsträger.

Gemäß einem weiteren Aspekt kann die Aufnahmeöffnung der Aufnahmeelemente jeweils eine Trennfuge zwischen Aufnahmeelement und Befestigungselement aufweisen, derart, dass das Befestigungselement in die Aufnahmeöffnung über eine Passung bis zu einem Anschlag einsteckbar ist und sodann über fluchtend zueinander ausgerichtete Aussparungen am Aufnahmeelement und eingesteckten Bereich des Befestigungselements verschraubbar und/oder verschraubt sind. Eine derartige Trennfuge mit Anschlag ermöglicht neben einer einfachen Montage ferner einen zusätzlichen Formschluss zwischen Aufnahmeelemente und Befestigungselement.

In einer weiteren Ausführungsform sind das erste Aufnahmeelement und das zweite Aufnahmeelement so ausgeführt, dass das erste Aufnahmeelement auf einer Oberseite eines der Rahmen-Längsträger und das zweite Aufnahmeelement auf einer Oberseite des anderen Rahmen-Längsträgers befestigbar und/oder befestigt ist. Dies ermöglicht eine baulich kompakte Ausführung der Vorrichtung, um eine Anordnung der Deformationseinrichtung oberhalb der Rahmen-Längsträger zu ermöglichen.

Gemäß einer weiteren Ausführungsform sind die Aufnahmeelemente jeweils als keilförmige Hohlprofile ausgeführt, umfassend zwei unter einem spitzen Winkel zusammenlaufende Seitenflächen, von denen eine ausgelegt ist, um auf der Oberseite eines der Rahmen-Längsträger befestigt werden zu können und wobei die Deformationseinrichtung an der zur Keilspitze abge wandten Seite der keilförmigen Hohlprofile befestigt ist. Dies ermöglicht ebenfalls eine baulich kompakte und gleichzeitig stabile Ausführung der Aufnahmeelemente. Die Seitenfläche, die auf der Oberseite eines der Rahmen-Längsträger befestigt wird, kann im Wesentlichen die gleiche Breite wie die Oberseite des Rahmen-Längsträgers aufweisen und mehrere Durchgangsöffnungen aufweisen, die fluchtend zu Löchern der Lochstruktur an der Oberseite der Rahmen-Längsträger angeordnet werden können.

Gemäß einem weiteren Gesichtspunkt wird ein Nutzfahrzeug, vorzugsweise ein Lastkraftwagen, bereitgestellt, umfassend zwei Fahrgestell-Längsträger, die durch Querträger mit einander verbunden sind und ferner umfassend eine Vorrichtung zum Energieabbau, wie in diesem Dokument beschrieben.

Wie vorstehend beschrieben, kann somit das Nutzfahrzeug eine Vorrichtung zum Energieabbau bei einer crashbedingten Energieeinwirkung auf das Nutzfahrzeug aufweisen. Hierbei umfasst die Vorrichtung eine Deformationseinrichtung, die im Crashfall unter Abbau von Aufprallkräften deformierbar ist und ein erstes Aufnahmeelement und ein zweites Aufnahmeelement zur Befestigung der Deformationseinrichtung an den beiden Rahmen-Längsträgern des Nutzfahrzeugs. Die Deformationseinrichtung ist an einem ersten Endbereich mit dem ersten Aufnahmeelement und an einem gegenüberliegenden zweiten Endbereich mit dem zweiten Aufnahmeelement verbunden. Hierbei ist das erste Aufnahmeelement an einem der Rahmen-Längsträger, vorzugsweise auf dessen Oberseite, befestigt und das zweite Aufnahmeelement ist am anderen Rahmen-Längsträger, vorzugsweise auf dessen Oberseite, befestigt. Erfindungsgemäß erstreckt sich die Deformationseinrichtung oberhalb und quer zu den Rahmen-längsträgern.

Gemäß einem weiteren Aspekt kann eine Befestigungsplatte vorgesehen sein, die sowohl mit einer Seitenfläche des Rahmen-Längsträgers als auch mit einer vertikalen Seitenwand des Aufnahmeelementes verschraubt ist. Dies erhöht die Stabilität der an den Rahmen-Längsträgern befestigten Vorrichtung in einer horizontalen Richtung quer zur Längsachse der Rahmen-Längsträger.

Ferner kann ein klammerförmig ausgeführtes Befestigungselement, nachfolgend als Formschlusselement bezeichnet, vorgesehen sein, das einen oberen Endbereich des Rahmen-längsträgers als auch einen darauf aufliegenden unteren Endbereich des Aufnahmeelements klammerförmig zur Ausbildung eines Formschlusses umgreift und so dann mit dem oberen Endbereich des Rahmen-Längsträgers als auch mit dem darauf aufliegenden Endbereich des Aufnahmeelements verschraubt ist. Mit einem derartigen Formschlusselement kann die Stabilität der an den Rahmen-Längsträgern befestigten Vorrichtung weiter erhöht werden.

In einer besonders bevorzugten Ausführungsform ist das Nutzfahrzeug ein zumindest teilweise batterieelektrisch betriebenes Nutzfahrzeug, aufweisend mindestens eine Hochvolt(HV)-Komponenten eines batterieelektrischen Antriebs des Nutzfahrzeugs, die zwischen den Rahmen-Längsträgern und unterhalb eines Aufenthaltsbereiches des Fahrerhauses angeordnet ist. Die mindestens eine HV-Komponente kann ein Batteriepack oder ein Inverter sein. Die Deformationseinrichtung ist unterhalb eines Aufenthaltsbereiches des Fahrerhauses und, in Vorwärtsfahrtrichtung gesehen, vor der mindestens einen Hochvolt-Komponente angeordnet zum Schutz der mindestens einen Hochvolt-Komponente bei einem crashbedingten Auffahren des Nutzfahrzeugs auf einen vorausfahrenden Trailer.

Die vorstehend beschriebene Vorrichtung hat ferner den Vorteil, dass die Vorrichtung als Bauteil das gleiche sog. Package über verschiedene Fahrzeugmodelle bzw. -baureihen aufweisen kann. Die Vorrichtung ist dabei so ausgelegt, dass es für die Montage und Demontage mehrteilig ausgeführt sein kann und zusätzlich einen Formschluss im zusammengebauten Zustand bietet. Der Formschluss stellt entsprechend sicher, dass die Crash-Strebe bei den gegebenen Lastfällen nicht kollabiert und dabei die zulässigen Grenzwerte für das Bauteil in einem zulässigen Maß liegen.

Die zuvor beschriebenen bevorzugten Ausführungsformen und Merkmale der Erfindung sind beliebig miteinander kombinierbar, sofern sie unter das Schutzbegehren der Ansprüche fallen. Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Energieabbau gemäß einer Ausführungsform der Erfindung; und
- Figur 2: eine Draufsicht der Vorrichtung aus Figur 1;

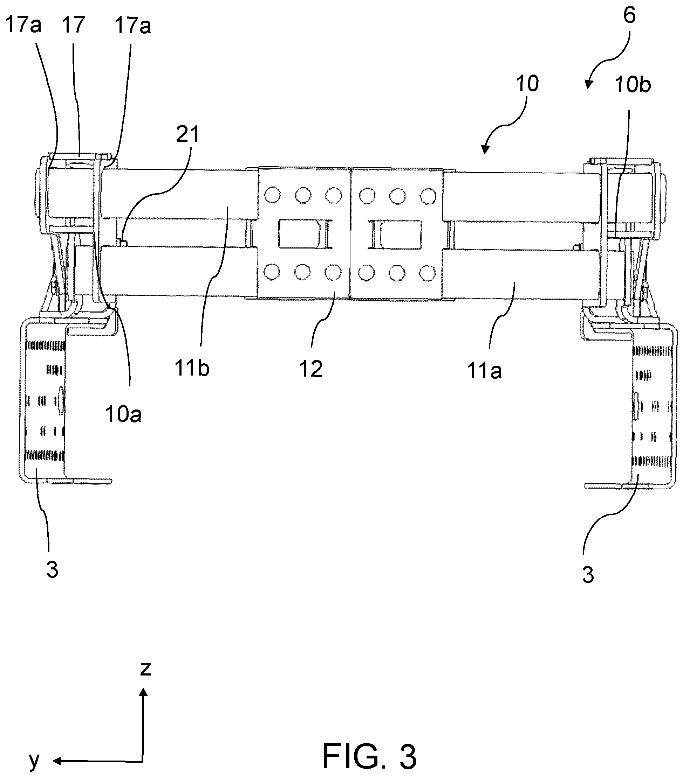

- Figur 3: eine Frontansicht der Vorrichtung aus Figur 1; und

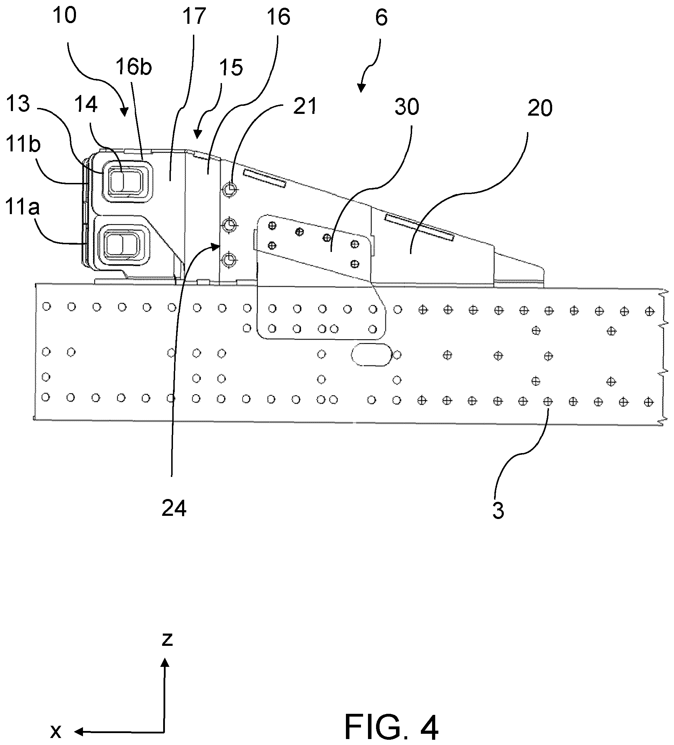

- Figur 4: eine Seitenansicht der Vorrichtung aus Figur 1.

Gleiche oder äquivalente Elemente sind in allen Figuren mit denselben Bezugszeichen bezeichnet und zum Teil nicht gesondert beschrieben.

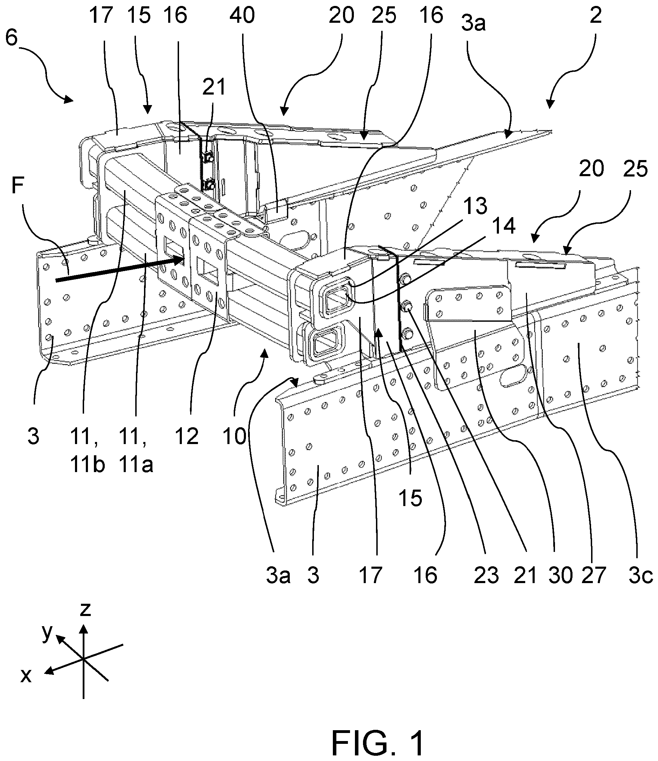

Figur 1 zeigt eine perspektivische Ansicht einer Vorrichtung 6 zum Energieabbau gemäß einer Ausführungsform der Erfindung.

In Figur 1 sind zwei Rahmen-Längsträger 3 eines Traggestells bzw. Leiterrahmens 2 eines Lastkraftwagens dargestellt, die in an sich bekannter Weise ausgeführt sind. Vorliegend sind die Rahmen-Längsträger 3 als offenes Profil, hier z. B. ein U-Profil, ausgeführt. Der in Figur 1 gezeigte Abschnitt der Rahmenlängsträger 3 ist der, in Vorwärtsfahrtrichtung x gesehen, vordere Endbereich 3b der Rahmen-Längsträger 3.

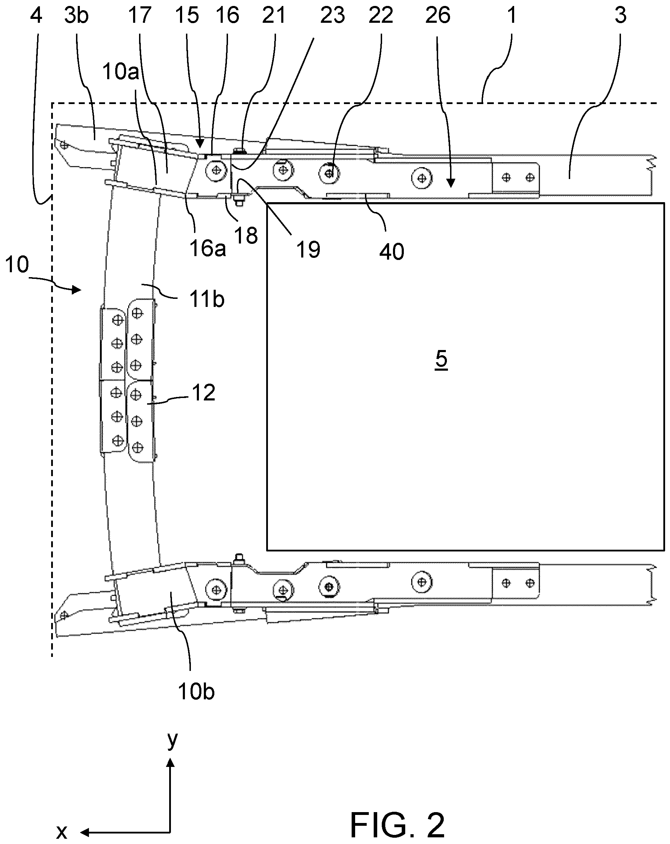

Beispielhaft kann der Lastkraftwagen als batterieelektrisch angetriebener Lastkraftwagen (LKW) ausgeführt sein. Bei einem solchen als batterieelektrisch angetriebenen LKW 1 kann zwischen den Rahmen-Längsträgern 3 und in einem Bereich unterhalb eines Aufenthaltsbereichs des Fahrerhauses, d.h. in einem vorderen Bereich des LKWs, ein Batteriepack und/oder andere HV-Komponenten des elektrischen Antriebs angeordnet sein. Dies ist in der Figur 2 dargestellt. Das Batteriepack wird zur Befestigung am Leiterrahmen 2 befestigt (nicht dargestellt).

Vorstehend wurde bereits festgestellt, dass die HV-Komponenten, insbesondere das Batteriepack, vor Beschädigung im Crashfall geschützt werden muss, da ein solches Batteriepack im Unterschied zu einem Verbrennungsmotor ein viel größeres Risiko hat, explosionsartig in Brand zu geraten.

Dieses Risiko ist besonders hoch bei einem crashbedingten Auffahren des LKWs 1 auf einen vorausfahrenden Trailer (nicht dargestellt), dessen Traggestell und Ladefläche üblicherweise eine Bauhöhe hat, so dass der Trailer im Crashfall genau in den Bereich knapp oberhalb des Rahmen-Längsträgers eindringen kann. Die Aufprallkraft bei einem Auffahren mit der Fahrzeugfront 4 auf einen solchen Trailer ist in Figur 1 durch den Pfeil F dargestellt und wirkt in dem Bereich knapp oberhalb der Rahmen-Längsträger 3.

Um diesen Bereich oberhalb der Rahmen-Längsträger 3 für den Crashfall gesondert abzusichern und damit auch die HV-Komponente 5, ist an den Rahmenlängsträgern 3 eine Deformationseinrichtung 10 so angeordnet und befestigt, dass sich die Deformationseinrichtung 10 in einem vorderen Endbereich der Rahmenlängsträger 3 oberhalb und quer, d.h. in Y-Richtung, zu den Rahmen-Längsträgern erstreckt.

Die Deformationseinrichtung 10 ist so ausgelegt, z. B. anhand von experimentellen Versuchen wie Crash-Tests, dass sie im Crashfall unter Abbau von Aufprallkräften bzw. Aufprallenergie deformierbar ist. Die Deformationseinrichtung ist ausgeführt, einen Teil der Aufprallenergie zu absorbieren und/oder durch Verformung gezielt abzubauen, damit der LKW abgebremst wird, ohne dass die Bauteile der Deformationseinrichtung 10 die dahinterliegenden Bauteile deformieren bzw. zu stark beschädigt werden.

Hierzu kann die Deformationseinrichtung eine oder mehrere Crashstreben 11 aufweisen. Im gezeigten Ausführungsbeispiel umfasst die Deformationseinrichtung 10 zwei parallel übereinander angeordnete Crashstreben 11a und 11b. Die Crashstreben 11a, 11b sind im Crashfall unter Einwirkung der Aufprallkraft F unter zumindest teilweisen Abbau von Aufprallkräften deformierbar. Die Streben 11a, 11b sind in Vorwärtsfahrtrichtung x, d.h. entgegen der Richtung der Aufprallkraft, gekrümmt. Die Streben 11a, 11b sind als Hohlprofil ausgeführt, vorliegend als Mehrkantrohr, das ein Innenrohr 14 und ein Außenrohr 13 aufweist.

Im Crashfall wird dann über eine gezielte Deformation des Rohrsystems 11a, 11b die Crashenergie durch Deformation der Crashstreben 11a, 11b zum Teil abgebaut, zum Teil auf das vorrausfahrende Fahrzeug übertragen und zum Teil in den auffahrenden LKW im erträglichen Maß eingeleitet.

Die Deformationseinrichtung 10 weist an ihren seitlichen Endbereichen 10a, 10b jeweils ein Befestigungselement 15 auf, sodass die beiden Crashstreben 11a, 11b zwischen den äußeren Befestigungselementen 15 angeordnet und endseitig an diesen befestigt sind. Die Befestigungselemente 15 umfassen zwei Abschnitte 16 und 17. Ein erster Abschnitt 16 zum Befestigen an einem am Rahmen-Längsträger 3 befestigten Aufnahmeelement 20 und ein zweiter Abschnitt 17 zur Halterung der Crashstreben 11a, 11b. Der zweite Abschnitt weist lediglich beispielhaft, jeweils zwei in y-Richtung versetzt angeordnete Befestigungsplatten auf, die jeweils eine an den Außenumfang der Crashstreben 11a, 11b angepasste Aufnahmeöffnung aufweisen, in denen die Crashstreben aufgenommen ist. Über die Berührungskanten sind die Crashstreben 11a, 11b mit dem zweiten Abschnitt 17 verschweißt.

Ferner weisen die Befestigungselemente 15 einen geknickten Verlauf auf, was in der Draufsicht der Figur 2 gut erkennbar ist. Der geknickte Verlauf zeichnet sich dadurch aus, dass der unmittelbar am Aufnahmeelement 20 befestigte erste Abschnitt 16 des Befestigungselements 15 fluchtend zum Aufnahmeelement 20 und parallel zur Längsrichtung x der Rahmen-Längsträger 3 verläuft und der sich daran anschließende zweite Abschnitt 17 des Befestigungselements 15 in Bezug auf die Längsrichtung der Rahmen-Längsträger 3 nach außen abgeknickt ist, so dass sich eine Knickstelle 16a ausbildet. Falls nun im Crashfall eine Aufprallkraft F auf die Crashstreben 11a, 11b wirkt, werden diese in Richtung von F gezogen und verformt, Dabei werden nunmehr die zweiten leicht abgeknickten Abschnitte 17 etwas hin zu Mitte, d.h. zu den Crashstreben 11a, 11b gezogen. Somit richten sich diese zweiten Abschnitte 17 im Crashfall fluchtend zu dem Rahmenlängsträgern 3 aus und der Knick verschwindet oder wird zumindest kleiner. Dies ermöglicht eine höhere Crashstabilität und Krafteinleitung in Längsrichtung der Rahmen-Längsträger.

Zur weiteren Erhöhung der Festigkeit und Stabilität der Deformationseinrichtung 10 ist ein Koppelteil 12 vorgesehen, das die zwei parallel übereinander angeordneten Streben 11a, 11b in einem mittleren Bereich umgreift, auf Abstand hält und mit diesen an dessen Kanten und über Schweißlöcher verschweißt ist. Hierbei weist das Koppelteil 12 zwei plattenförmige und klammerförmige Teilelemente auf, die jeweils auf gegenüberliegenden Seiten, in Vorwärtsfahrtrichtung gesehen, an den Streben 11a, 11b befestigt sind. Die Teilelemente weisen Schweißlöcher auf, um hierüber und an deren Kanten mit den Streben 11a und 11b verschweißt werden zu können. Zwischen den Streben 11a, 11b erstreckt sich in x-Richtung ein Stegabschnitt des Koppelteils 12, dessen Höhe dem Abstand der Streben 11a, 11b in z-Richtung entspricht, um die Streben 11a, 11b auf Abstand zu halten.

Die Deformationseinrichtung 10 ist über zwei seitliche Aufnahmen, vorliegend als Aufnahmeelemente 20 bezeichnet, an den Rahmen-Längsträgern 3 befestigt. Jedes der Aufnahmeelemente 20 ist dabei an einem der Rahmen-Längsträger 3 befestigt.

In der hier gezeigten beispielhaften Ausführungsform sind die Aufnahmeelemente 20 jeweils als keilförmige Hohlprofile ausgeführt, umfassend zwei unter einem spitzen Winkel zusammenlaufende Seitenflächen 25, 26, von denen die untere Seitenfläche auf einer Oberseite 3a eines der Rahmen-Längsträger 3 aufliegt und mit dieser verschraubt ist. Die Verschraubung 22 in z-Richtung zwischen Oberseite 3a der Rahmen-Längsträger und unterer Seitenfläche 26 der Aufnahmeelemente 20 ist in Figur 2 dargestellt.

In Figur 1 ist ferner ein klammerförmig ausgeführtes Formschlusselement 40 dargestellt, das einen oberen Endbereich des Rahmen-Längsträgers 3 als auch einen darauf aufliegenden unteren Endbereich des Aufnahmeelements 20 klammerförmig zur Ausbildung eines Formschlusses umgreift. Das Formschlusselement wird daher in y-Richtung aufgesteckt und so dann mit dem oberen Endbereich des Rahmen-Längsträgers 3 als auch mit dem darauf aufliegenden Endbereich des Aufnahmeelements 20 verschraubt.

Zur Befestigung der Deformationseinrichtung 10 an den Aufnahmeelementen 20 werden die die Befestigungselemente 15 jeweils in eine Aufnahmeöffnung 24 eines der Aufnahmeelemente 15 gesteckt und dort mit dem Aufnahmeelement 15 verschraubt.

Die Aufnahmeöffnung 24 wird durch den nicht spitzen Endbereich der keilförmigen Aufnahmeelemente 20 ausgebildet. Hierbei wird das Befestigungselement 15 in die Aufnahmeöffnung 24 über eine Passung 19 bis zu einem Anschlag 18 eingesteckt und sodann über fluchtend zueinander ausgerichtete Aussparungen am Aufnahmeelement 20 und eingesteckten Bereich des Befestigungselements 15 verschraubt. Das Bezugszeichen 21 kennzeichnet diese Verschraubung. Eine derartige Trennfuge 23 mit Anschlag 18 zwischen Aufnahmeelement 20 und Befestigungselement 15 ermöglicht neben einer einfachen Montage ferner einen zusätzlichen Formschluss zwischen Aufnahmeelemente und Befestigungselement.

Schließlich ist noch eine Befestigungsplatte 30 mit Lochstruktur vorgesehen, die sowohl mit einer Seitenfläche 3c des Rahmen-Längsträgers 3 auch als mit einer vertikalen Seitenwand 27 des Aufnahmeelementes 20 verschraubt (nicht dargestellt) ist.

Zusammenfassend kann somit die Deformationseinrichtung 10 mit der mindestens einen Crashstrebe 11, die in Vorwärtsfahrtrichtung x gesehen, vor der Hochvolt-Komponente 5 angeordnet ist, die Hochvolt-Komponente bei einem crashbedingten Auffahren des Nutzfahrzeugs auf ein Fremdfahrzeug, insbesondere einen vorausfahrenden Trailer schützen.

### Bezugszeichenliste

- 1: Nutzfahrzeug
- 2: Leiterrahmen
- 3: Rahmen-Längsträger
- 3a: Oberseite des Rahmen-Längsträgers
- 3b: Vorderer Endbereich des Rahmen-Längsträgers
- 3c: Seitenfläche
- 4: Fahrzeugfront
- 5: Hochvolt-Komponente, z. B. Batteriepack
- 6: Vorrichtung zum Energieabbau
- 10: Deformationseinrichtung
- 10a: Erster Endbereich
- 10b: Zweiter Endbereich
- 11: Strebe
- 11a: Untere Strebe
- 11b: Obere Strebe
- 12: Koppelteil
- 13: Außenrohr
- 14: Innenrohr
- 15: Befestigungselement
- 16: Erster Abschnitt
- 16a: Knick
- 17: Zweiter Abschnitt
- 17a: Ausnehmung
- 18: Anschlag
- 19: Passung
- 20: Aufnahmeelement
- 21: Verschraubung
- 22: Verschraubung
- 23: Trennfuge
- 24: Aufnahmeöffnung
- 25: Obere Seitenfläche
- 26: Untere Seitenfläche
- 27: Vertikale Seitenwand
- 30: Befestigungsplatte
- 40: Formschlusselement

## Patentansprüche

1. Vorrichtung (6) zum Energieabbau bei einer crashbedingten Energieeinwirkung auf ein Nutzfahrzeug (1) aufweisend zwei Rahmen-Längsträger (3) die durch Querträger miteinander verbunden sind, wobei die Vorrichtung (6) umfasst:
eine Deformationseinrichtung (10), die im Crashfall unter Abbau von Aufprallkräften deformierbar ist, und
ein erstes Aufnahmeelement (20) und ein zweites Aufnahmeelement (20) zur Befestigung der Deformationseinrichtung (10) an den beiden Rahmenlängsträgern (3) des Nutzfahrzeugs (1), wobei die Deformationseinrichtung (10) an einem ersten Endbereich (10a) mit dem ersten Aufnahmeelement (20) und an einem gegenüberliegenden zweiten Endbereich (10b) mit dem zweiten Aufnahmeelement (20) verbunden ist,
wobei das erste Aufnahmeelement (20) und das zweite Aufnahmeelement (20) so ausgeführt sind, dass das erste Aufnahmeelement (20) und das zweite Aufnahmeelement (20) jeweils an einem der Rahmen-Längsträger (3) befestigbar sind;
wobei die Deformationseinrichtung (10) und das erste und zweite Aufnahmeelement (20) so ausgelegt sind, dass wenn die Aufnahmeelemente (20) jeweils an den Rahmen-Längsträgern (30) befestigt sind, sich die Deformationseinrichtung (10) oberhalb und quer zu den Rahmen-Längsträgern (30) erstreckt, wobei die Deformationseinrichtung (10) mindestens eine Strebe (11) aufweist, die im Crashfall unter Abbau von Aufprallkräften deformierbar ist, **dadurch gekennzeichnet, dass** die Deformationseinrichtung (10) zwei Befestigungselemente (15) aufweist, zwischen denen die mindestens eine Strebe (11) angeordnet und jeweils endseitig befestigt ist, wobei die Befestigungselemente (15) jeweils in eine Aufnahmeöffnung (24) eines der Aufnahmeelemente (20) gesteckt und dort mit dem Aufnahmeelement (20) kraftschlüssig und formschlüssig verbunden sind.

2. Vorrichtung (6) nach Anspruch 1, wobei die mindestens eine Strebe (11) gekrümmt ausgeführt ist, vorzugsweise derart, dass bezogen auf die Aufnahmeelemente (20) die mindestens eine Strebe (11) von diesen weggekrümmt ausgeführt ist.

3. Vorrichtung (6) nach einem der vorherigen Ansprüche, wobei die Strebe (11) als Hohlprofil ausgeführt ist.

4. Vorrichtung (6) nach einem der vorherigen Ansprüche, wobei die Strebe (11) ein oder mehrere Innenrohre (14) und ein Außenrohr (13) umfasst.

5. Vorrichtung (6) nach Anspruch 4, wobei das Innenrohr (14)
a) aus einem Material gefertigt ist, das eine höhere Festigkeit als das Material des Außenrohres (13) aufweist; und/oder
b) aus einem Kohlefaserverbundwerkstoff gefertigt ist.

6. Vorrichtung (6) nach einem der vorherigen Ansprüche, wobei die Deformationseinrichtung (10) zwei parallel übereinander angeordnete Streben (11a, 11b) aufweist.

7. Vorrichtung (6) nach Anspruch 6, wobei die Deformationseinrichtung (10) ein Koppelteil (12) umfasst, das die zwei parallel übereinander angeordneten Streben (11a, 11b) umgreift, auf Abstand hält und vorzugsweise mit diesen an dessen Kanten und über Schweißlöcher verschweißt ist.

8. Vorrichtung (6) nach einem der vorherigen Ansprüche, wobei die Befestigungselemente (15) einen geknickten Verlauf aufweisen, derart, dass wenn die Aufnahmeelemente (20) jeweils an den Rahmen-Längsträgern (30) befestigt sind, ein unmittelbar am Aufnahmeelement (20) befestigter erster Abschnitt (16) des Befestigungselements (15) fluchtend zum Aufnahmeelement (20) und parallel zur Längsrichtung der Rahmen-Längsträger (3) verläuft und sich daran ein zweiter Abschnitt (17) des Befestigungselements (15) anschließt, an dem die mindestens eine Strebe (11) befestigt ist, und der in Bezug auf die Längsrichtung der Rahmen-Längsträger (3) nach außen abgeknickt (16a) ist.

9. Vorrichtung (6) nach einem der vorherigen Ansprüche, wobei die Aufnahmeöffnung (24) der Aufnahmeelemente (20) eine Trennfuge (23) zwischen Aufnahmeelement (20) und Befestigungselement (15) aufweist, derart, dass das Befestigungselement (15) in die Aufnahmeöffnung (24) über eine Passung bis zu einem Anschlag (18) einsteckbar ist und sodann über fluchtend zueinander ausgerichtete Aussparungen verschraubbar und/oder verschraubt (21) ist.

10. Vorrichtung (6) nach einem der vorherigen Ansprüche, wobei die Deformationseinrichtung (10) als einteiliges Bauteil oder einteilige Baugruppe ausgeführt ist oder wobei die Befestigungselemente (15) mit der mindestens einen Strebe (11) verschweißt sind.

11. Vorrichtung (6) nach einem der vorherigen Ansprüche, wobei das erste Aufnahmeelement (20) und das zweite Aufnahmeelement (20) so ausgeführt sind, dass das erste Aufnahmeelement (20) an einer Oberseite (3a) eines der Rahmen-Längsträger und das zweite Aufnahmeelement (20) auf einer Oberseite (3a) des anderen Rahmen-Längsträgers (3) befestigbar ist.

12. Vorrichtung (6) nach Anspruch 11, wobei die Aufnahmeelemente (20) jeweils als keilförmige Hohlprofile ausgeführt sind, umfassend zwei unter einem spitzen Winkel zusammenlaufende Seitenflächen (25, 26), von denen eine (26) ausgelegt ist, um auf der Oberseite (3a) eines der Rahmen-Längsträger (3) befestigt werden zu können und wobei die Deformationseinrichtung (10) an der zur Keilspitze abgewandten Seiten der keilförmigen Hohlprofile befestigt ist.

13. Nutzfahrzeug (1), umfassend
zwei Fahrgestell-Längsträger (3), die durch Querträger miteinander verbunden sind; und
eine Vorrichtung (6) gemäß einer der vorhergehenden Ansprüche.

14. Nutzfahrzeug (1) nach Anspruch 13, ferner umfassend eine Befestigungsplatte (30), die sowohl mit einer Seitenfläche (3c) des Rahmen-Längsträgers (3) auch als mit einer vertikalen Seitenwand (27) des Aufnahmeelementes (20) verschraubt ist.

15. Nutzfahrzeug (1) nach Anspruch 13 oder 14, ferner umfassend ein klammerförmig ausgeführtes Formschlusselement (40), das einen oberen Endbereich des Rahmen-Längsträgers (3) als auch einen darauf aufliegenden unteren Endbereich des Aufnahmeelements (20) klammerförmig zur Ausbildung eines Formschlusses umgreift und so dann mit dem oberen Endbereich des Rahmen-Längsträgers (3) als auch mit dem darauf aufliegenden Endbereich des Aufnahmeelements (20) verschraubt ist.

16. Nutzfahrzeug (1) nach einem der Ansprüche 13 bis 15, wobei das Nutzfahrzeug ein batterieelektrisch betriebenes Nutzfahrzeug ist, aufweisend mindestens eine Hochvolt-Komponente (5) eines batterieelektrischen Antriebs des Nutzfahrzeugs, die zwischen den Rahmen-Längsträgern (3) und unterhalb eines Aufenthaltsbereiches des Fahrerhauses angeordnet ist, wobei die Deformationseinrichtung (10), in Vorwärtsfahrtrichtung gesehen, vor der mindestens einen Hochvolt-Komponente (5) angeordnet ist zum Schutz der mindestens einen Hochvolt-Komponente (5) bei einem crashbedingten Auffahren des Nutzfahrzeugs (1) auf einen vorausfahrenden Trailer.

## Claims

1. Device (6) for energy dissipation in the event of crash-induced energy impact on a utility vehicle (1) comprising two frame longitudinal members (3) interconnected by cross members, wherein the device (6) comprises:
a deformation device (10) that is deformable in the event of a crash while dissipating impact forces, and
a first receiving element (20) and a second receiving element (20) for fastening the deformation device (10) to the two frame longitudinal members (3) of the utility vehicle (1), wherein the deformation device (10) is connected at a first end region (10a) to the first receiving element (20) and at an opposite second end region (10b) to the second receiving element (20),
wherein the first receiving element (20) and the second receiving element (20) are configured such that the first receiving element (20) and the second receiving element (20) can each be fastened to one of the frame longitudinal members (3);
wherein the deformation device (10) and the first and second receiving elements (20) are configured such that when the receiving elements (20) are each fastened to the frame longitudinal members (30), the deformation device (10) extends above and transversely to the frame longitudinal members (30), wherein the deformation device (10) comprises at least one strut (11) that is deformable in the event of a crash while dissipating impact forces, **characterized in that** the deformation device (10) comprises two fastening elements (15) between which the at least one strut (11) is arranged and fastened at each end, wherein the fastening elements (15) are each inserted into a receiving opening (24) of one of the receiving elements (20) and are connected thereto in a force-fitting and form-fitting manner.

2. Device (6) according to Claim 1, wherein the at least one strut (11) is of curved design, preferably such that, relative to the receiving elements (20), the at least one strut (11) is curved away from said receiving elements.

3. Device (6) according to one of the preceding claims, wherein the strut (11) is designed as a hollow section.

4. Device (6) according to one of the preceding claims, wherein the strut (11) comprises one or more inner tubes (14) and an outer tube (13).

5. Device (6) according to Claim 4, wherein the inner tube (14)
a) is made of a material that has a higher strength than the material of the outer tube (13); and/or
b) is made of a carbon fibre composite material.

6. Device (6) according to one of the preceding claims, wherein the deformation device (10) comprises two struts (11a, 11b) arranged in parallel one above the other.

7. Device (6) according to Claim 6, wherein the deformation device (10) comprises a coupling part (12) that embraces the two struts (11a, 11b) arranged in parallel one above the other, holds them at a spacing and is preferably welded to them at its edges and via weld holes.

8. Device (6) according to one of the preceding claims, wherein the fastening elements (15) have a bent profile such that, when the receiving elements (20) are each fastened to the frame longitudinal members (30), a first section (16) of the fastening element (15) directly fastened to the receiving element (20) is flush with the receiving element (20) and runs parallel to the longitudinal direction of the frame longitudinal members (3), and is adjoined by a second section (17) of the fastening element (15) to which the at least one strut (11) is fastened and which is angled outwardly (16a) with respect to the longitudinal direction of the frame longitudinal members (3).

9. Device (6) according to one of the preceding claims, wherein the receiving opening (24) of the receiving elements (20) has a separating gap (23) between the receiving element (20) and the fastening element (15), such that the fastening element (15) can be inserted into the receiving opening (24) by means of a fit up to a stop (18) and can then be screwed and/or is screwed (21) via mutually aligned recesses.

10. Device (6) according to one of the preceding claims, wherein the deformation device (10) is designed as a one-piece component or one-piece assembly, or wherein the fastening elements (15) are welded to the at least one strut (11).

11. Device (6) according to one of the preceding claims, wherein the first receiving element (20) and the second receiving element (20) are configured such that the first receiving element (20) can be fastened to an upper side (3a) of one of the frame longitudinal members and the second receiving element (20) can be fastened to an upper side (3a) of the other frame longitudinal member (3).

12. Device (6) according to Claim 11, wherein the receiving elements (20) are each designed as wedge-shaped hollow sections comprising two lateral faces (25, 26) converging at an acute angle, one (26) of which is designed to be fastenable to the upper side (3a) of one of the frame longitudinal members (3), and wherein the deformation device (10) is fastened to the sides of the wedge-shaped hollow sections facing away from the wedge tip.

13. Utility vehicle (1), comprising
two chassis longitudinal members (3) interconnected by cross members; and
a device (6) according to one of the preceding claims.

14. Utility vehicle (1) according to Claim 13, further comprising a fastening plate (30) that is screwed both to a lateral face (3c) of the frame longitudinal member (3) and to a vertical side wall (27) of the receiving element (20).

15. Utility vehicle (1) according to Claim 13 or 14, further comprising a clip-shaped form-fitting element (40) that engages in a clip-like manner around an upper end region of the frame longitudinal member (3) and a lower end region of the receiving element (20) resting thereon in order to form a positive fit, and is then screwed to the upper end region of the frame longitudinal member (3) and to the end region of the receiving element (20) resting thereon.

16. Utility vehicle (1) according to one of Claims 13 to 15, wherein the utility vehicle is a battery-electrically operated utility vehicle comprising at least one high-voltage component (5) of a battery-electric drive of the utility vehicle, which is arranged between the frame longitudinal members (3) and below an occupancy area of the driver's cab, wherein the deformation device (10), as viewed in the forward direction of travel, is arranged in front of the at least one high-voltage component (5) in order to protect the at least one high-voltage component (5) in the event of crash-induced rear-end collision of the utility vehicle (1) with a trailer travelling ahead.

## Revendications

1. Dispositif (6) pour la dissipation d'énergie en cas de sollicitation énergétique due à une collision sur un véhicule utilitaire (1), présentant deux longerons de cadre (3) reliés entre eux par des traverses, le dispositif (6) comprenant :
un appareil de déformation (10), qui, en cas de collision, est déformable avec dissipation des forces d'impact, et
un premier élément de réception (20) et un deuxième élément de réception (20) pour la fixation de l'appareil de déformation (10) aux deux longerons de cadre (3) du véhicule utilitaire (1), l'appareil de déformation (10) étant relié, au niveau d'une première zone d'extrémité (10a), au premier élément de réception (20) et, au niveau d'une deuxième zone d'extrémité opposée (10b), au deuxième élément de réception (20) ;
le premier élément de réception (20) et le deuxième élément de réception (20) étant réalisés de telle sorte que le premier élément de réception (20) et le deuxième élément de réception (20) peuvent chacun être fixés à l'un des longerons de cadre (3) ;
l'appareil de déformation (10) et le premier et le deuxième élément de réception (20) étant conçus de telle sorte que, lorsque les éléments de réception (20) sont chacun fixés aux longerons de cadre (30), l'appareil de déformation (10) s'étend au-dessus des longerons de cadre (30) et transversalement à ceux-ci, l'appareil de déformation (10) présentant au moins une entretoise (11) qui est déformable en cas de collision avec dissipation des forces d'impact, **caractérisé en ce que** l'appareil de déformation (10) présente deux éléments de fixation (15) entre lesquels l'au moins une entretoise (11) est disposée et fixée à chacune de ses extrémités, les éléments de fixation (15) étant chacun insérés dans une ouverture de réception (24) de l'un des éléments de réception (20) et y étant reliés à l'élément de réception (20) par adhérence et par complémentarité de forme.

2. Dispositif (6) selon la revendication 1, l'au moins une entretoise (11) étant réalisée de manière courbée, de préférence de telle sorte que, par rapport aux éléments de réception (20), l'au moins une entretoise (11) est réalisée de manière courbée à l'écart de ceux-ci.

3. Dispositif (6) selon l'une quelconque des revendications précédentes, l'entretoise (11) étant réalisée sous forme de profilé creux.

4. Dispositif (6) selon l'une quelconque des revendications précédentes, l'entretoise (11) comprenant un ou plusieurs tubes intérieurs (14) et un tube extérieur (13).

5. Dispositif (6) selon la revendication 4, le tube intérieur (14)
a) étant fabriqué à partir d'un matériau qui présente une résistance supérieure à celle du matériau du tube extérieur (13) ; et/ou
b) étant fabriqué à partir d'un matériau composite à fibres de carbone.

6. Dispositif (6) selon l'une quelconque des revendications précédentes, l'appareil de déformation (10) présentant deux entretoises (11a, 11b) disposées parallèlement l'une au-dessus de l'autre.

7. Dispositif (6) selon la revendication 6, l'appareil de déformation (10) comprenant une pièce de liaison (12) qui entoure les deux entretoises (11a, 11b) disposées parallèlement l'une au-dessus de l'autre, les maintient à distance et est de préférence soudée à celles-ci au niveau de ses bords et par l'intermédiaire de de trous de soudage.

8. Dispositif (6) selon l'une quelconque des revendications précédentes, les éléments de fixation (15) présentant un tracé coudé, de telle sorte que, lorsque les éléments de réception (20) sont chacun fixés aux longerons de cadre (30), une première section (16) de l'élément de fixation (15), fixée directement à l'élément de réception (20), est alignée avec l'élément de réception (20) et s'étend parallèlement à la direction longitudinale des longerons de cadre (3), et une deuxième section (17) de l'élément de fixation (15) s'y raccorde, à laquelle l'au moins une entretoise (11) est fixée, et qui est coudée (16a) vers l'extérieur par rapport à la direction longitudinale des longerons de cadre (3).

9. Dispositif (6) selon l'une quelconque des revendications précédentes, l'ouverture de réception (24) des éléments de réception (20) présentant un joint de séparation (23) entre l'élément de réception (20) et l'élément de fixation (15), de telle sorte que l'élément de fixation (15) peut être inséré dans l'ouverture de réception (24) par l'intermédiaire d'un ajustement jusqu'à une butée (18) et peut ensuite être vissé et/ou est vissé (21) par l'intermédiaire d'évidements alignés les uns par rapport aux autres.

10. Dispositif (6) selon l'une quelconque des revendications précédentes, l'appareil de déformation (10) étant réalisé sous forme d'un composant monobloc ou d'un ensemble monobloc, ou les éléments de fixation (15) étant soudés à l'au moins une entretoise (11).

11. Dispositif (6) selon l'une quelconque des revendications précédentes, le premier élément de réception (20) et le deuxième élément de réception (20) étant réalisés de telle sorte que le premier élément de réception (20) peut être fixé sur un côté supérieur (3a) de l'un des longerons de cadre et le deuxième élément de réception (20) peut être fixé sur un côté supérieur (3a) de l'autre longeron de cadre (3).

12. Dispositif (6) selon la revendication 11, les éléments de réception (20) étant chacun réalisés sous la forme de profilés creux en forme de coin, comprenant deux surfaces latérales (25, 26) convergeant l'une vers l'autre selon un angle aigu, dont l'une (26) est conçue pour pouvoir être fixée sur le côté supérieur (3a) de l'un des longerons de cadre (3), et l'appareil de déformation (10) étant fixé sur le côté des profilés creux en forme de coin détourné de la pointe du coin.

13. Véhicule utilitaire (1), comprenant
deux longerons de châssis (3), qui sont reliés entre eux par des traverses ; et
un dispositif (6) selon l'une quelconque des revendications précédentes.

14. Véhicule utilitaire (1) selon la revendication 13, comprenant en outre une plaque de fixation (30), qui est vissée à la fois à une surface latérale (3c) du longeron de cadre (3) et à une paroi latérale verticale (27) de l'élément de réception (20).

15. Véhicule utilitaire (1) selon la revendication 13 ou 14, comprenant en outre un élément de complémentarité de forme (40) réalisé en forme de pince, qui entoure en forme de pince une zone d'extrémité supérieure du longeron de cadre (3) ainsi qu'une zone d'extrémité inférieure de l'élément de réception (20) reposant sur celle-ci, pour réaliser une liaison par complémentarité de forme, et qui est ensuite vissé à la fois avec la zone d'extrémité supérieure du longeron de cadre (3) et avec la zone d'extrémité inférieure de l'élément de réception (20) reposant sur celle-ci.

16. Véhicule utilitaire (1) selon l'une quelconque des revendications 13 à 15, le véhicule utilitaire étant un véhicule utilitaire à propulsion électrique à batterie, présentant au moins un composant haute tension (5) d'un entraînement électrique à batterie du véhicule utilitaire, qui est disposé entre les longerons de cadre (3) et au-dessous d'une zone de séjour de la cabine de conducteur, l'appareil de déformation (10) étant disposé, dans la direction de marche avant, en amont de l'au moins un composant haute tension (5) pour protéger l'au moins un composant haute tension (5) lors d'un heurt du véhicule utilitaire (1) avec une remorque le précédant dû à une collision.
